## Europäisches Patentamt
## European Patent Office
## Office européen des brevets

(19)

(11) Veröffentlichungsnummer: **0 137 252**
**B1**

(12) **EUROPÄISCHE PATENTSCHRIFT**

(45) Veröffentlichungstag der Patentschrift:
02.09.87

(51) Int. Cl.⁴: **B 60 K 41/04**

(21) Anmeldenummer: **84109985.6**

(22) Anmeldetag: **22.08.84**

(54) Getriebesteuerung für ein Strassenfahrzeug.

(30) Priorität: **26.09.83 DE 3334718**

(43) Veröffentlichungstag der Anmeldung:
**17.04.85 Patentblatt 85/16**

(45) Bekanntmachung des Hinweises auf die Patenterteilung:
**02.09.87 Patentblatt 87/36**

(84) Benannte Vertragsstaaten:
**AT DE FR IT SE**

(56) Entgegenhaltungen:
**EP-A-0 111 636**
**DE-A-2 717 256**
**DE-A-2 929 266**
**DE-A-3 139 985**
**DE-A-3 246 201**

(73) Patentinhaber: **WABCO Westinghouse Fahrzeugbremsen GmbH, Am Lindener Hafen 21 Postfach 91 12 80, D-3000 Hannover 91 (DE)**

(72) Erfinder: **Der Erfinder hat auf seine Nennung verzichtet**

(74) Vertreter: **Schrödter, Manfred, WABCO Westinghouse Fahrzeugbremsen GmbH Am Lindener Hafen 21 Postfach 91 12 80, D-3000 Hannover 91 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung bezieht sich auf eine Einrichtung mit einer Getriebesteuerung für ein Straßenfahrzeug gemäß dem Oberbegriff des Patentanspruchs 1, wie sie aus der DE-A-3 139 985 bekannt ist.

Die Erfindung bezieht sich vornehmlich auf Straßenfahrzeuge, speziell Nutzfahrzeuge, mit einem die Drehzahl stufenweise variierenden Getriebe. Sie ist aber auch bei stufenlos übersetzenden Getrieben vorteilhaft anwendbar, wobei anstelle von einzelnen Gängen eine unbegrenzte Zahl von Übersetzungen wählbar ist.

Bei Fahrten im bergigen Gelände kommt es vor, daß der Fahrer eines Straßenfahrzeuges keine ausreichende Orientierung darüber hat, welche Straßensteigung oder welches Gefälle er gerade befährt, weil ihm diesbezügliche Hinweise fehlen. Dies kann dann negative Folgen haben, wenn er ein Gefälle unterschätzt und deshalb eine zu große Geschwindigkeit fährt. Bei Fahrzeugen mit stufenweise übersetzenden Getrieben gilt allgemein, mit dem Gang den Berg hinunter zu fahren, mit dem man hinauffahren würde. Dies läßt sich sinngemäß auch auf die Fahrgeschwindigkeit übertragen.

Auch bei Fahrzeugen, die mit automatisch schaltenden Getrieben, Schalthilfen oder Schaltempfehlungen ausgerüstet sind, tritt diese Problematik auf. Die Automatik wählt bei Bergabfahrten meist einen zu großen Gang, wobei dann die Bremswirkung des Motors nicht genügend ausgenutzt wird.

Ein weiteres Problem ist darin zu sehen, daß die Getriebeübersetzung bzw. die Fahrgeschwindigkeit, die bei einer Gefällefahrt optimal ist, außer vom Gefälle auch vom Gewicht des Fahrzeugs abhängig ist. Bei hohem Fahrzeuggewicht ist eine kleinere Geschwindigkeit zweckmäßig, damit der Anhalteweg im Notfall nicht zu lang wird.

Bei der bekannten Steuerung für ein Automatik-Getriebe (DE-A-31 39 985) wird das Übersetzungsverhältnis des Getriebes dann erhöht, wenn die Bremse betätigt wird. Hierdurch wird die Motor-Bremswirkung beim Bremsen mit ausgenutzt. In dieser Anordnung wird nicht zwischen ebener Straße und Gefälle unterschieden. Auch die Steilheit des Gefälles und das Fahrzeuggewicht werden nicht berücksichtigt. Ein ständiges Umschalten beim Bremsen ist für den Fahrer unangenehm.

Der Erfindung liegt die Aufgabe zugrunde, eine Einrichtung der eingangs genannten Art anzugeben, die bei einer Gefällefahrt eine für das jeweilige Gefälle und das jeweilige Fahrzeug-Gewicht zweckmäßige Übersetzung oder Geschwindigkeit auswählt.

Diese Aufgabe wird von der im Patentanspruch 1 angegebenen Merkmalen gelöst. Vorteilhafte Weiterbildungen der Erfindung sind in den Unteransprüchen angegeben.

Durch die erfindungsgemäße Einrichtung mit einer Getriebesteuerung wird jedem Gefälle der optimal passende Gang zugeordnet. Dieser ist so gewählt, daß im Regelfall das Gefälle ohne zusätzliche Betätigung der Betriebsbremse befahren werden kann. Ein möglicherweise zusätzlich benutzter Verlangsamer (z. B. Auspuff-Klappe oder Retarder) wird dabei berücksichtigt.

Im Extremfall (zügiges Fahrprogramm) wird der optimal passende Gang so gewählt, daß eine der jeweiligen Fahrsituation zugemessene maximale Geschwindigkeit, die höher liegt als die ohne Betriebsbremsbetätigung fahrbare Geschwindigkeit, gefahren werden kann.

Ein kurzzeitiges Bremsen oder Gasgeben führt nicht zum Wechsel des zugeordneten optimalen Gefälle-Ganges.

Wird die von der genannten Einrichtung ermittelte Getriebeübersetzung an Gefällen wie vorgeschlagen dem jeweiligen, für eine unbeschleunigte Fahrt notwendigen stationären Antriebsmoment $M_{stat}$ zugeordnet, dann ergibt sich hierdurch eine einfache und zweckmäßige Berücksichtigung des Fahrzeuggewichtes.

Das Fahrzeuggewicht wird vorteilhaft gemäß der in der älteren EP-A-111 636 vorgeschlagenen Weise ermittelt, bei der sich mit geringem Aufwand eine ausreichende Genauigkeit ergibt. Das Gewicht kann aber auch direkt gemessen werden.

Durch die erfindungsgemäße Einrichtung ergibt sich eine einfache Möglichkeit die für das jeweilige Gefälle optimal passende Getriebeübersetzung mit Sensoren oder Gebern für direkt meßbare Fahrzeugparameter zu ermitteln.

Die Erfindung wird im folgenden anhand eines Ausführungsbeispiels, das in einer Zeichnung dargestellt ist, näher erläutert.

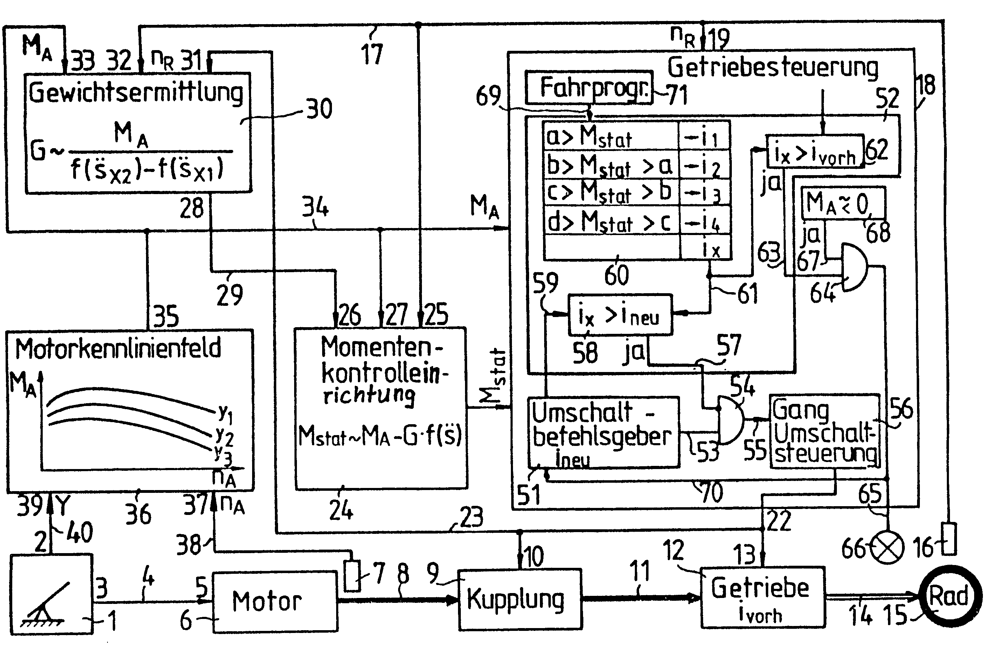

Die Zeichnung zeigt in vereinfachter Darstellung die wesentlichen Elemente eines von einer Antriebsmaschine angetriebenen Fahrzeugs. Als Antriebsmaschine dient ein Verbrennungsmotor 6, dessen Kraftstoffzufuhr mittels eines Gebers 1 steuerbar ist. Über eine Welle 8 ist der Motor 6 mit einer Kupplung 8 verbunden, die ihrerseits über eine Welle 11 mit einem Getriebe 12 verbunden ist.

Das Getriebe 12 dient zum Antrieb einer Achse 14, die ihrerseits die angetriebenen Fahrzeugräder des Fahrzeugs antreibt. Von den angetriebenen Rädern des Fahrzeugs ist der Einfachheit halber nur das Rad 15 dargestellt.

Der Geber 1 für die Steuerung der Kraftstoffzufuhr des Motors 6 weist einen Signalausgang 3 auf, der über eine Signalleitung 4 mit einem Signaleingang 5 des Motors 6 verbunden ist. Der Geber 1 ist ferner mit einer Einrichtung versehen, die die Stellung des Gebers 1 als Signalgröße (Motor-Steuersignal) y darstellt. Diese Signalgröße y ist an einem weiteren Signalausgang 2 des Gebers 1 abrufbar. Im einfachsten Fall enthält der Geber 1 als Steuerglied für die Kraftstoffzufuhr des Motors 6 ein übliches, mechanisch arbeitendes Gaspedal. Der Geber 1 kann jedoch auch - wie im dargestellten Ausführungsbeispiel - als elektrischer oder elektronischer Geber ausgebildet sein, wobei der Motor 6 entsprechend mittels eines Steuersignals steuerbar ist.

Die zwischen der antriebsseitigen Welle 8 und der abtriebsseitigen Welle 11 angeordnete Kupplung 9 ist mittels eines Steuersignals betätigbar, das einem Signaleingang 10 der Kupplung 9 zuführbar ist.

Das Getriebe 12 ist ebenfalls elektrisch steuerbar, wobei ein Signaleingang 13 des Getriebes 12 zum Empfang entsprechender Steuersignale zum Einlegen des jeweils gewünschten oder erforderlichen Ganges dient. Sowohl die Kupplung 8 als auch das Getriebe 12 können im einfachsten Fall rein mechanisch betätigt werden. In diesem Fall stellen die Signaleingänge 10 und 13 symbolhaft die Verbindung von Kupplungs-Betätigungsmechanismen und Getriebe-Betätigungsmechanismen mit den entsprechenden Betätigungseinrichtungen für die Kupplung 9 und das Getriebe 12 dar.

In einer Momenten-Kontrolleinrichtung 24 wird ein jeweiliges stationäres Antriebsmoment $M_{stat}$ dadurch bestimmt, daß die Differenz zwischen dem tatsächlichen vom Motor 6 aufgebrachten jeweiligen momentanen Antriebsmoment $M_A$ des Fahrzeugs und einer solchen Rechengröße bestimmt wird, die sich als das Produkt aus dem Gewicht des Fahrzeugs und dem Rechenwert der momentanen Beschleunigung š des Fahrzeugs ergibt. Das stationäre Antriebsmoment $M_{stat}$ ist das Moment, welches zum beschleunigungslosen Antrieb des Fahrzeugs erforderlich wäre. Es ist unabhängig vom gefahrenen Gang und könnte z. B. mit einem geeigneten Sensor bei gleichmäßiger Fahrt an der Kardanwelle abgegriffen werden. Dies ist jedoch aufwendiger als die nachfolgend beschriebene Berechnung.

Um die erwähnte Differenz berechnen zu können, werden der Momenten-Kontrolleinrichtung 24 über einen Signaleingang 27 das momentane Antriebsmoment $M_A$ des Motors 6, über einen Signaleingang 26 das Gewicht G des Fahrzeugs und über einen Signaleingang 25 die Drehzahl $n_R$ des angetriebenen Rades 15 zugeführt.

Der Signaleingang 27 der Momenten-Kontrolleinrichtung 24 ist über eine Leitung 34 an den Signalausgang 35 eines Motorkennfeld-Speichers 36 angeschlossen, der an dem erwähnten Signalausgang 35 ein dem momentanen Antriebsmoment $M_A$ des Motors 6 entsprechendes Signal zur Verfügung stellt.

Der Signaleingang 26 der Momenten-Kontrolleinrichtung 24 ist über eine Signalleitung 29 an eine Gewichtsermittlung 30 zur Ermittlung des Gewichts G des Fahrzeugs angeschlossen. An einem Signalausgang 28 der Gewichtsermittlung 30 steht ein dem Gewicht des Fahrzeugs entsprechendes Signal zur Verfügung.

Der Signaleingang 25 der Momenten-Kontrolle 24 ist über eine Signalleitung 17 mit einem sensor 16 zur Erfassung der Rad-Drehzahl $n_R$ verbunden.

In der Momenten-Kontrolleinrichtung 24 wird durch Differenzierung aus dem zeitlichen Verlauf der Drehzahl $n_R$ die Beschleunigung š des Fahrzeugs berechnet.

Das jeweilige momentane Antriebsmoment $M_A$ des Motors 6 wird aus einem Motorkennlinienfeld des Spechiers 36 ermittelt, welches in einer Tabelle die Abhängigkeit der folgenden Größen voneinander enthält: momentanes Antriebsmoment $M_A$ des Motors 6, Drehzahl $n_A$ des Motors 6 und Signalgröße y des Gebers (Gaspedal) 1. Im dargestellten Ausführungsbeispiel enthält der Speicher 36 für verschiedene Werte $y_1$, $y_2$, $y_3$ des Gebers 1 je eine Kennlinie für die Abhängigkeit des momentanen Antriebsmomentes $M_A$ von der Drehzahl $n_A$.

Unter dem Motor-Kennlinienfeld sind auch solche Kennlinienfelder zu verstehen, die den Betriebszustand des Motors indirekt beschreiben, wie beispielsweise ein Kennlinienfeld, das die Abhängigkeit von Antriebsmoment $M_A$, Drehzahl $n_A$ und der Einspritzzeit enthält.

Weiterhin sind unter "Momenten" auch Antriebsgrößen allgemein zu verstehen, also zum Beispiel auch Leistungsgrößen oder solche vergleichbaren Größen, die die Antriebsmomente lediglich als eine von mehreren Rechengrößen enthalten.

Die Signalgröße y des Gebers 1 wird einem Signaleingang 39 des Speichers 36 über eine Signalleitung 40 zugeführt, die ihrerseits an den Signalausgang 2 des Gebers 1 angeschlossen ist. Die Drehzahl $n_A$ des Motors 6 wird mittels eines die Welle 8 abtastenden Sensors 7 ermittelt und über eine Signalleitung 38 einem Signaleingang 37 des Spechiers 36 zugeführt, der so ausgebildet ist, daß für jedes Wertpaar $y/n_A$ das momentane Antriebsmoment $M_A$ an seinem Signalausgang 35 zur Verfügung steht. Das Motor-Moment kann mit einem geeigneten Sensor auch direkt gemessen werden.

Die Drehzahl $n_A$ des Motors 6 kann auch aus der Rad-Drehzahl $n_R$ des Rades 15 berechnet werden, wenn das jeweilige Übersetzungsverhältnis des Getriebes 12 berücksichtigt wird.

In der in der älteren EP-A-111 636 bereits beschrieben Gewichtsermittlung 30 zur Ermittlung des Gewichtes G des Fahrzeugs wird das Verhältnis zwischen dem momentanen Antriebsmoment $M_A$ des Motors 6 und einer Differenz zweier Rechengrößen gebildet, wobei die erwähnten Rechengrößen jeweils eine der Beschleunigung des Fahrzeugs entsprechende Beschleunigungsgröße enthalten. Diese beiden Beschleunigungsgrößen $š_{x2}$ und $š_{x1}$ werden zu verschiedenen Zeiten ermittelt, wobei die eine Beschleunigungsgröße vorzugsweise zu einem Zeitpunkt ermittelt wird, in dem sich das Fahrzeug in einem antriebslosen Zustand, z. B. in einer Schaltpause, befindet. In diesem antriebslosen Zustand wird das Fahrzeug nicht wesentlich beschleunigt oder verzögert.

Um die Rechenoperation durchführen zu können, wird der Gewichtsermittlung 30 über die Signalleitung 34 und einen Signaleingang 33 das momentane Antriebsmoment $M_A$ des Motors 6 zugeführt. Der zur Bildung der Beschleunigungsgrößen $\ddot{s}_{x2}$ und $\ddot{s}_{x1}$ erforderliche zeitliche Verlauf der Drehzahl $n_R$ des angetriebenen Rades 15 wird der Gewichtsermittlung 30 über die Signalleitung 17 und einen Signaleingang 32 zugeführt. Über die Signalleitung 23 wird einem Signaleingang 31 der Gewichtsermittlung 30 der Zeitpunkt mitgeteilt, zu dem die Kupplung 9 geöffnet ist. Damit kann zwischen Zeiten, in denen das Fahrzeug dem Antrieb durch den Motor 6 unterliegt und nicht unterliegt, unterschieden werden. Zu diesen unterschiedlichen Zeiten werden auch die Beschleunigungsgrößen $\ddot{s}_{x2}$ und $\ddot{s}_{x1}$ gemessen bzw. bestimmt.

Alle genannten elektrischen Signalleitungen können ein- oder mehrpolig ausgeführt sein und damit auch mehrere unterschiedliche Signale übertragen.

Die allgemeine Formel zur Ermittlung des Fahrzeuggewichtes G lautet:

$$G = \frac{M_{A1} - M_{A2}}{f(\ddot{s}_{x1}) - f(\ddot{s}_{x2})}$$

Werte mit Index 1 sind zum Zeitpunkt 1 und Werte mit Index 2 sind zum Zeitpunkt 2 ermittelt.

Neben dem obenbeschriebenen Sonderfall $M_{A2} = 0$, der für die Schaltpause gilt, kann auch der Sonderfall $f(\ddot{s}_{x2}) = 0$ ausgewertet werden. Dieser gilt für unbeschleunigte Fahrt.

Die obige Gleichung kann auch allgemein, ohne die Sonderfälle abzuwarten, ausgewertet werden. Dabei ist darauf zu achten, daß die beiden Meßpunkte nicht zu weit auseinanderliegen. Um jedoch eine ausreichende Genauigkeit für die Gewichtsgröße zu erhalten, sollte die Differenz der Antriebsmomente $M_{A1}$ und $M_{A2}$ möglichst groß gewählt werden.

Die Gewichtsermittlung 30 kann auch so ausgebildet sein, daß verschiedene ermittelte Gewichtsgrößen G zur Bildung eines Mittelwertes für die Gewichtsgrößen verwendet werden und daß dieser Mittelwert eine vorbestimmte Änderung nicht überschreitet.

Um sicherzustellen, daß auch dann, wenn in der Gewichtsermittlung 30 z. B. wegen zu kurzer Fahrzeit noch kein ausreichend genauer Wert für die Gewichtsgröße G vorliegt, in der Momenten-Kontrolleinrichtung 24 ein brauchbarer Wert für das stationäre Antriebsmoment $M_{stat}$ bestimmt werden kann, ist es vorteilhaft, statt der von der Gewichtsermittlung 30 ermittelten Gewichtsgröße G zunächst eine mittlere Gewichtsgröße $G_0$ zu verwenden, die z. B. einem halbbeladenen Fahrzeug entspricht.

Für eine sichere Bestimmung und Berechnung der Gewichtsgröße G eignet sich in vorteilhafter Weise ein in der Gewichtsermittlung 30 vorgesehener Mikrocomputer, mit dem insbesondere auch die zeitabhängigen Rechenvorgänge bezüglich der Beschleunigungsgrößen auf einfache Weise realisiert werden können.

Zur Steuerung des Getriebes 12 ist eine schematisch dargestellte Getriebesteuerung 18 vorgesehen. Der Getriebesteuerung 18 werden die Werte der Raddrehzahlen $n_R$, des Motormomentes $M_A$ und des stationären Momentes $M_{stat}$ zugeführt. Im einfachsten Fall arbeitet die Getriebesteuerung 18 so, daß das Getriebe 12 in Abhängigkeit von der Geschwindigkeit des Fahrzeugs und somit in Abhängigkeit von der Drehzahl $n_R$ der angetriebenen Räder automatisch geschaltet wird. Zur Erfassung der Drehzahl $n_R$ des angetriebenen Rades 15 dient der Sensor 16, dessen Drehzahl-Signal über die Signalleitung 17 einem Signaleingang 18 der Getriebesteuerung 18 zugeführt ist. Über einen Signalausgang 22 und die Signalleitung 23 ist die Getriebesteuerung 18 mit dem Signaleingang 13 des Getriebes 12 und dem Signaleingang 10 der Kupplung 9 verbunden.

Wenn in der Getriebesteuerung 18 in Abhängigkeit von der Geschwindigkeit des Fahrzeugs und unter Berücksichtigung vorgegebener Auswahlkriterien ein neuer Gang festgelegt wird, wird die Kupplung 9 über ihren Signaleingang 10 betätigt und anschließend bei getrennter Kupplung das Getriebe 12 über seinen Signaleingang 13 von der Getriebesteuerung 18 umgeschaltet. Danach wird dann die Kupplung 9 wieder geschlossen. Die Steuerung bzw. Betätigung der Kupplung 9 und des Getriebes 12 können rein mechanisch über Servomotoren der Getriebesteuerung 18 erfolgen.

Zu den vorstehend erwähnten Auswahlkriterien, nach denen in der Getriebesteuerung 18 jeweils ein neuer Gang festgelegt wird, gehört eine Überprüfung, ob der neue Betriebspunkt nach dem Einlegen des ausgewählten neuen Ganges in der Nähe des verbrauchsgünstigen Betriebsbereiches liegt. Um die Darstellung zu vereinfachen, ist eine solche Einrichtung in der Zeichnung nicht dargestellt, sie ist aber Bestandteil der Getriebesteuerung 18.

Die obenerwähnte Auswahl eines optimalen Ganges mit der Übersetzung $i_{neu}$ erfolgt durch einen zur Getriebesteuerung 18 gehörenden Umschaltbefehlsgeber 51. Dessen Schaltsignal wird über Leitungen 53, 55 an eine Gangumschaltsteuerung 56 geleitet. Diese sorgt für die richtige Abfolge der Steuerbefehle an den Gangzylindern und an der Kupplung 9, die zum Einlegen des ausgewählten Ganges nötig sind. Die Befehle werden über den Ausgang 22 an das Getriebe 12 und die Kupplung 9 geleitet.

Die vom Umschaltbefehlsgeber 51 ausgegebenen Schaltsignale können durch ein Sperrsignal, das von einer Gefällegangzuordnung 52 kommt, unterbrochen werden.

Dieses ist dann der Fall, wenn auf einer Steuerleitung 57 ein Signal ansteht. Dieses Signal wird auf ein Sperrglied 54 gegeben, das zwischen die Leitungen 53 und 55 geschaltet ist. Das Sperrsignal auf der Leitung 57 wird von einem ersten Gangvergleicher 58 dann abgegeben, wenn die vom Umschaltbefehlsgeber 51 vorgeschlagenen neue Übersetzung $i_{neu}$ kleiner ist als die von einem in der Gefälleganzuordnung 52 angeordneten Momentenvergleicher 60 dem aktuellen stationären Moment $M_{stat}$ bzw. der Straßensteigung zugeordnete Übersetzung $i_x$.

Das für den beschleunigungslosen Antrieb des Fahrzeugs nötige stationäre Moment $M_{stas}$ hat im Gefälle einen negativen Wert. Dieser Wert ist im Betrag um so größer, je steiler das Gefälle und je schwerer das Fahrzeug ist. Im Momentenvergleicher 60 ist eine Tabelle gespeichert, die verschiedenen Werten von $M_{stat}$ den jeweils optimalen Gefälle-Gang zuordnet. So ist z. B. für einen hohen Wert von $M_{stat}$, im Bereich zwischen den Grenzen c und d, eine hohe Übersetzung ($i_4$) optimal.

Die optimalen Gefälleübersetzungen $i_x$ können in der Tabelle des Momentenvergleichers 60 anstatt dem stationären Moment$_{stat}$ auch der Straßensteigung p zugeordnet sein. Dann muß die Steigung durch eine Einrichtung im Fahrzeug ermittelt werden. Zusätzlich muß dann das Fahrzeuggewicht in der Tabelle berücksichtigt werden.

Wie bereits eingangs gesagt, würde im Gefälle eine Schaltautomatik einen zu hohen Gang bzw. eine zu kleine Übersetzung $i_{neu}$ vorschlagen. Um dies zu verhindern, wird die im Umschaltbefehlsgeber 51 berechnete Übersetzung $i_{neu}$ über eine Leitung 59 an den ersten Gangvergleicher 58 gegeben. Gleichzeitig erhält dieser den jeweils optimalen Wert $i_x$ aus dem Momentenvergleicher 60 über eine Leitung 61. Falls der Vergleich von $i_{neu}$ und $i_x$ ergibt, daß die optimale Übersetzung $i_x$ größer ist als die berechnete Übersetzung $i_{neu}$, wird auf der Leitung 57 ein Sperrsignal erzeugt und damit ein Hochschalten verhindert.

Die von dem Momentenvergleicher 60 über die Leitung 61 abgegebene optimale Gefälle-Übersetzung $i_x$ wird auch an einen zweiten Gangvergleicher 62 geleitet, der ebenso wie der erste Gangverleicher 58 in der Gefällegangzuordnung 52 angeordnet ist. Dort wird überprüft, ob die gerade vorhandene Übersetzung $i_{vorh}$ kleiner ist als die von dem Momentenvergleicher 60 ermittelte Übersetzung $i_x$. Ist dieses der Fall, wird über eine Leitung 63 ein Signal an ein UND-Glied 64 abgegeben. Am Ausgang des UND-Gliedes 64 wird über eine Leitung 65 dann ein Signal an eine Warnlampe 66 abgegeben und diese zum Aufleuchten gebracht, wenn außer auf der Leitung 63 auch ein Signal auf einer zweiten Leitung 67 ansteht, das von einer Einrichtung 68 dann abgegeben wird, wenn das momentane Antriebsmoment $M_A$ des Motors kleiner oder ungefähr gleich Null ist, d.h. wenn der Fahrer kein Gas gibt bzw. mit dem Motor bremst.

Durch das Aufleuchten der Warnlampe 66 soll dem Fahrer signalisiert werden, daß er in einer für die vorliegende Steigung zu kleinen Übersetzung fährt und er in eine größere Übersetzung, bzw. in einen kleineren Gang zurückschalten sollte. Eine andere Möglichkeit ist, daß an einer evtl. vorhandenen Gangempfehlungseinrichtung der empfohlene Gang zum Blinken gebracht werden kann (nicht dargestellt). Es wäre auch möglich, über das Warnsignal auf der Leitung 70 den Umschaltbefehlsgeber 51 direkt zum Zurückschalten des Getriebes in eine größere Übersetzung bzw. einen kleineren Gang zu veranlassen. Dies ist jedoch dann nicht zulässig, wenn dadurch die maximal zulässige Motordrehzahl überschritten würde. Das Aufleuchten der Warnlampe 66 zeigt daher dem Fahrer an, daß er das Fahrzeug zunächst abbremsen muß, bevor ein Herunterschalten möglich ist.

Die Festlegung der Grenzwerte a, b, c, d im Momentenvergleicher 60 erfolgt nach Motor-, Getriebe- und fahrtechnischen Gesichtspunkten. So ist ein Fahrzeug an einem Gefälle dann nicht gefährdet, wenn die Bremskraft des Motors und evtl. vorhandener Motorbremse oder sonstigen Dauerbremsen ohne zusätzliche Betriebsbremskräfte ausreicht, eine unbeschleunigte Bergabfahrt des Fahrzeugs zu ermöglichen. Da die Bremskraft mit der Getriebeübersetzung steigt, läßt sich so empirisch für ein jeweiliges Fahrzeug und für ein jeweiliges Gefälle die optimale Getriebeübersetzung $i_x$ ermitteln, die nicht unterschritten werden darf. Dieses Kriterium kann als Grenzwert für die Zuordnung der Übersetzung $i_x$ zum jeweiligen Gefälle gelten. Hieraus ergibt sich eine unterste Geschwindigkeit bzw. ein kleinster Gang mit größter Übersetzung.

Da aber davon ausgegangen werden muß, daß der Fahrer am Gefälle zusätzlich auch die Betriebsbremse und Dauerbremsen betätigen kann, kann eine höhere Fahrgeschwindigkeit und damit eine kleinere Übersetzung $i_x$ bzw. ein höherer Gang festgelegt werden, bei dem diese Fahrgeschwindigkeit auf dem jeweiligen Gefälle noch kein erhöhtes Risiko darstellt. So kann z. B. für ein Gefälle von 5 % eine maximale Geschwindigkeit von 60 km/h als noch sicher zugelassen werden. Nach dieser Regel kann ein unterster Grenzwert für die Zuordnung der Übersetzung $i_x$ zum Gefälle definiert werden. Dabei darf die Betriebsbremse auch bei längerer Gefällefahrt nicht überhitzt werden.

Damit ist ein Bereich von verschiedenen Gefällen ohne Risiko zuzuordnenden Übersetzungen $i_x$ definiert (im Momentenvergleicher 60 nicht dargestellt). Welche Übersetzung $i_x$ im Einzelfall gewählt wird, kann vorteilhaft abhängig gemacht werden von einem vom Fahrer gewählten Fahrprogramm (z. B. ökonomisch oder zügig), von dem vom Fahrer gesteuerten Antriebsmoment $M_A$, von der Größe der Bremskraft der Betriebsbremse oder von anderen Einflußgrößen. Die Zuführung dieser Größen an den Momentenvergleicher 60 erfolgt, symbolisch dargestellt, über eine Leitung 69 aus einem Fahrprogramm-Geber 71.

Um ein ständiges Wechseln der Übersetzung am Fahrzeug bei sehr kurzen Gefällen zu verhindern, kann weiter ein Zeitglied (nicht dargestellt) in die Leitung 65 eingebaut werden, um damit das Signal für die Warnlampe 66 um eine angemessene Zeit zu verzögern.

**Patentansprüche**

1. Einrichtung mit einer Getriebesteuerung (18) für ein von einer Antriebsmaschine über ein die Übersetzung variierendes Getriebe angetriebenes Straßenfahrzeug zur Ermittlung von Schaltsignalen in Gefällen, wobei die Bremswirkung der Antriebsmaschine verstärkt ausgenutzt wird, gekennzeichnet durch folgende Merkmale:
a) Es ist eine Momenten-Kontroll einrichtung (24) zur Berechnung eines stationären Momentes $M_{stat}$, das zum beschleunigungslosen Antrieb des Fahrzeuges nötig ist, unter Zuhilfenahme eines momentanen Antriebsmoments $M_A$, des Fahrzeuggewichtes G und der Fahrzeugbeschleunigung š vorgesehen,
b) die Getriebesteuerung (18) enthält eine Gefällegangzuordnung (52) mit einem Momentenvergleicher (60), in dem verschiedenen Werten des stationären Momentes $M_{stat}$ jeweils ein passender Gang mit der Übersetzung $i_x$ zugeordnet ist,
c) die Getriebesteuerung (18) empfiehlt oder bewirkt das Einlegen des passenden Ganges mit der Übersetzung $i_x$.
2. Einrichtung nach Anspruch 1, dadurch gekennzeichnet, daß die Gefällegangzuordnung (52) einen ersten und einen zweiten Gangvergleicher (58, 62) enthält, die dann Signale zur Steuerung des Getriebes (12) abgeben, wenn die Übersetzung $i_{neu}$ eines nach vorgegebenen Umschaltkriterien neu gewählten Ganges und/oder die Übersetzung $i_{vorh.}$ eines gerade eingelegten Ganges kleiner ist als der passende Gang mit der Übersetzung $i_x$.
3. Einrichtung nach Anspruch 1 bis 2, dadurch gekennzeichnet, daß die Zuordnung des passenden Ganges mit der Übersetzung $i_x$ durch ein vom Fahrer wählbares Fahrprogramm (71) mit je mindestens einer Einstellung für zügiges und ökonomisches Fahren beeinflußbar ist.
4. Einrichtung nach Anspruch 1 bis 3, dadurch gekennzeichnet, daß die Zuordnung des passenden Ganges mit der Übersetzung $i_x$ durch die Gaspedalstellung beeinflußbar ist, wobei der stärkeren Gaspedalstellung eine kleinere Getriebeübersetzung zugeordnet ist.
5. Einrichtung nach Anspruch 1 bis 4, dadurch gekennzeichnet, daß die Zuordnung des passenden Gangens mit der Übersetzung $i_x$ durch die Bremspedalstellung beeinflußbar ist, wobei größerer Bremskraft eine größere Getriebeübersetzung zugeordnet ist.

6. Einrichtung nach Anspruch 1 bis 5, dadurch gekennzeichnet, daß die Zuordnung des passenden Ganges mit der größten Übersetzung $i_x$ derart erfolgt, daß bei der Gaspedalstellung Null und betätigter Motorbremse und/oder eingelegtem Verlangsamer der Motor im jeweiligen Gefälle bis auf eine Drehzahl nahe seiner maximalen Drehzahl hochgedreht wird.
7. Einrichtung nach Anspruch 1 bis 6, dadurch gekennzeichnet, daß die Zuordnung des passenden Ganges mit der kleinsten Übersetzung $i_x$ derart erfolgt, daß eine empirisch ermittelte, an dem jeweiligen Gefälle risikofrei fahrbare maximale Geschwindigkeit nicht überschritten wird.
8. Einrichtung nach Anspruch 7, dadurch gekennzeichnet, daß die risikofrei fahrbare maximale Geschwindigkeit so gewählt wird, daß die Betriebsbremse des Fahrzeugs selbst bei den längsten Gefällestrecken nicht überhitzt werden kann.
9. Einrichtung nach Anspruch 1 bis 8, dadurch gekennzeichnet, daß ein Sperrglied (54), eine Gangumschaltung dann sperrt, wenn die Übersetzung $i_x$ des passenden Ganges größer ist als die Übersetzung $i_{neu}$ des gewählten Ganges.
10. Einrichtung nach Anspruch 1 bis 9, dadurch gekennzeichnet, daß eine Warnlampe (66) angesteuert wird, wenn die Übersetzung $i_x$ des passenden Ganges größer ist als die Übersetzung $i_{vorh.}$ des vorhandenen Ganges und eine sofortige Rückschaltung wegen Überschreitens der maximalen Motordrehzahl nicht möglich ist.
11. Einrichtung nach Anspruch 1 bis 10, dadurch gekennzeihnet, daß das Einlegen des passenden Ganges um eine vorgegebene Zeit verzögerbar ist.
12. Einrichtung nach Anspruch 1 bis 11, dadurch gekennzeichnet, daß das Einlegen des passenden Ganges gesperrt wird, wenn der Fahrer im Gefälle das Gaspedal betätigt oder das Gefälle sich zu kleineren Werten ändert.
13. Einrichtung nach Anspruch 1 bis 12, dadurch gekennzeichnet, daß der von der Gefällegangzuordnung (52) ermittelte passende Gang, die entsprechende Übersetzung $i_x$ oder die entsprechende Fahrgeschwindigkeit anzeigbar ist.
14. Einrichtung nach Anspruch 1 bis 13, dadurch gekennzeichnet, daß zur Ausführung der Berechnungen mindestens ein Mikrocomputer vorgesehen ist.

**Claims**

1. Device with a transmission control means (18) for a road vehicle, driven by a drive engine by way of a transmission that changes the transmission ratio, for determining shift signals on gradients, wherein much use is made of the braking action of the drive engine, characterised by the following features:
a) there is provided a torque-control device (24) for calculating a steady torque $M_{stat}$, which is necessary for driving the vehicle without acceleration, from an instantaneous driving torque $M_A$, the vehicle weight G and the vehicle acceleration s̈,

b) the transmission-control means (18) contains a gradient gear allocation means (52) with a torque-comparison means (60) in which a suitable gear with the transmission ratio $i_x$ is allocated to each of the different values of the steady torque $M_{stat}$,

c) the transmission-control means (18) recommends or causes the engagement of the suitable gear with the transmission ratio $i_x$.

2. Device according to claim 1, characterised in that the gradient gear allocation means (52) contains a first and a second gear-comparison means (58, 62) which deliver signals to the control means for the transmission (12) if the transmission ratio $i_{new}$ of a gear that has been newly selected according to predetermined shift criteria, or the transmission ratio $i_{previous}$ of a gear that has just been engaged, is smaller than the suitable gear with the transmission ratio $i_x$.

3. Device according to claims 1 to 2, characterised in that the allocation of the suitable gear with the transmission ratio $i_x$ can be influenced by a driving programme (71), selectable by the driver, having at least one position each for steady and economical driving.

4. Device according to claims 1 to 3, characterised in that the allocation of the suitable gear with the transmission ratio $i_x$ can be influenced dy the accelerator pedal position, there being allocated to the faster accelerator pedal position a lower transmission ratio.

5. Device according to claims 1 to 4, characterised in that the allocation of the suitable gear with the transmission ratio $i_x$ can be influenced by the brake pedal position, a higher transmission ratio being allocated to greater braking force.

6. Device according to claims 1 to 5, characterised in that the allocation of the suitable gear with the highest transmission ratio $i_x$ is as follows: when the accelerator pedal position is zero and the engine brake is operated and/or the engine retarder is engaged, in each gradient the number of revolutions per minute is increased to close to its maximum number of revolutions per minute.

7. Device according to claims 1 to 6, characterised in that the allocation of the suitable gear with the lowest transmission ratio $i_x$ is effected as follows: an empirically determined maximum speed at which it is possible to drive without risk on the gradient in question is not exceeded.

8. Device according to claim 7, characterised in that the maximum speed at which it is possible to drive without risk is so selected that the operating brake of the vehicle itself cannot de overheated over the longest distances of falling gradient.

9. Device according to claims 1 to 8, characterised in that a blocking element (54) blocks a shift in gear if the transmission ratio $i_x$ of the suitable gear is higher than the transmission ratio i of the newly selected gear.

10. Device according to claims 1 to 9, characterised in that a warning light (66) is switched on when the transmission ratio $i_x$ of the suitable gear is higher than the transmission ratio $i_{previous}$ of the current gear and immediate shifting dack is not possible because of exceeding the maximum engine speed.

11. Device according to claims 1 to 10, characterised in that the engagement of the suitable gear can be delayed dy a predetermined time.

12. Device according to claims 1 to 11, characterised in that the engagement of the suitable gear is blocked if the driver operates the accelerator pedal on the gradient or if the slope of the gradient becomes less.

13. Device according to claims 1 to 12, characterised in that the suitable gear ascertained by the gradient gear allocation means (52), the corresponding transmission $i_x$ or the corresponding driving speed can be indicated.

14. Device according to claims 1 to 13, characterised in that at least one microcomputer is provided for carrying out the calculations.

**Revendications**

1. Dispositif avec une commande (18) de la transmission d'un véhicule routier propulsé par un moteur via une boîte de vitesses, pour la détermination de signaux de changement de vitesse sur des descentes, avec utilisation renforcée de l'effet de freinage du moteur, ledit dispositif étant caractérisé en ce que:

a) un dispositif de contrôle du couple (24) est prévu pour le calcul, à l'aide d'un couple instantané $M_A$, du poids G du véhicule et de l'accélération s̈ du véhicule, d'un couple stationnaire $M_{stat}$ nécessaire à la propulsion du véhicule sans accélération;

b) la commande (18) de la boîte de vitesses comporte un circuit (52) d'affectation d'une vitesse à la descente avec un comparateur de couple (60) dans lequel une vitesse appropriée de rapport $i_x$ est affectée à différentes valeurs du couple stationnaire $M_{stat}$; et

c) la commande (18) de la boîte de vitesses recommande ou produit le passage de la vitesse appropriée de rapport $i_x$.

2. Dispositif selon revendication 1, caractérisé en ce que le circuit d'affectation d'une vitesse à la descente (52) comprend un premier et un second comparateur de vitesse (58, 62) qui délivre des signaux de commande de la boîte de vitesses (12) quand le rapport $i_{nouveau}$ d'une nouvelle vitesse sélectée selon des critères de changement de vitesse prédéterminés et/ou le rapport $i_{ancien}$ d'une vitesse passée sont inférieurs à la vitesse appropriée de rapport $i_x$.

3. Dispositif selon revendications 1 et 2, caractérisé en ce que l'affectation de la vitesse appropriée de rapport $i_x$ peut être influencée par un programme de conduite (71) sélecté par le conducteur et comportant au moins un réglage de conduite rapide et un réglage de conduite économique.

4. Dispositif selon revendications 1 à 3, caractérisé en ce que l'affectation de la vitesse appropriée de rapport $i_x$ est influençable par la position de la pédale d'accélération, un rapport plus faible de la boîte étant affecté à un enfoncement plus élevé de la pédale.

5. Dispositif selon revendications 1 à 4, caractérisé en ce que l'affectation de la vitesse appropriée de rapport $i_x$ est influençable par la position de la pédale de frein, un rapport plus élevé de la boîte étant affecté à un effort de freinage supérieur.

6. Dispositif selon revendications 1 à 5, caractérisé en ce que l'affectation de la vitesse appropriée de rapport $i_x$ maximal s'effectue de façon que, la pédale d'accélération étant au repos et le frein-moteur étant actionné et/ou le ralentisseur branché, le moteur tourne sur la descente considérée à une vitesse proche de sa vitesse de rotation maximale.

7. Dispositif selon revendications 1 à 6, caractérisé en ce que l'affectation de la vitesse appropriée de rapport $i_x$ minimal s'effectue de façon à ne pas dépasser une vitesse maximale, déterminée empiriquement, de déplacement sans risque sur la descente considérée.

8. Dispositif selon revendication 7, caractérisé en ce que la vitesse maximale de déplacement sans risque est sélectée de façon que le frein principal du véhicule ne surchauffe pas même sur les plus longues descentes.

9. Dispositif selon revendications 1 à 8, caractérisé en ce qu'un organe (54) bloque le changement de vitesse quand le rapport $i_x$ de la vitesse appropriée est supérieur au rapport $i_{nouveau}$ de la nouvelle vitesse sélectée.

10. Dispositif selon revendications 1 à 9, caractérisé en ce qu'une lampe témoin (66) est commandée quand le rapport $i_x$ de la vitesse appropriée est supérieur au rapport $i_{ancien}$ de la vitesse actuelle et une rétrogradation immédiate est impossible par suite d'un dépassement de la vitesse de rotation maximale du moteur.

11. Dispositif selon revendications 1 à 10, caractérisé en ce que le passage de la vitesse appropriée peut être retardé d'un temps prédéterminé.

12. Dispositif selon revendications 1 à 11, caractérisé en ce que le passage de la vitesse appropriée est bloqué quand le conducteur enfonce la pédale d'accélération en descente ou la pente de la descente diminue.

13. Dispositif selon revendications 1 à 12, caractérisé par la possibilité d'indication de la vitesse appropriée, determinée par le circuit (52) d'affectation d'une vitesse à la descente, du rapport $i_x$ correspondant ou de la vitesse du véhicule correspondante.

14. Dispositif selon revendications 1 à 13, caractérisé par un micro-ordinateur au moins pour l'exécution des calculs.

0 137 252

**Gewichtsermittlung**

$$G \sim \frac{M_A}{f(\ddot{s}_{x2}) - f(\ddot{s}_{x1})}$$

$M_A$

**Motorkennlinienfeld**

$M_A$ — $n_A$ — $y_1$, $y_2$, $y_3$

**Momentenkontrolleinrichtung**

$M_{stat} \sim M_A - G \cdot f(\ddot{s})$

**Getriebesteuerung**

**Fahrprogr.**

| | |
|---|---|
| $a > M_{stat}$ | $- i_1$ |
| $b > M_{stat} > a$ | $- i_2$ |
| $c > M_{stat} > b$ | $- i_3$ |
| $d > M_{stat} > c$ | $- i_4$ |
| | $i_x$ |

$i_x > i_{vorh}$  ja

$M_A \approx 0$  ja

$i_x > i_{neu}$  ja

**Umschaltbefehlsgeber** $i_{neu}$

**Gang Umschaltsteuerung**

$M_{stat}$

$n_R$  $n_A$  $Y$

**Motor**

**Kupplung**

**Getriebe** $i_{vorh}$

**Rad**